# EUROPEAN PATENT APPLICATION

(11) **EP 2 083 374 A1**
(43) Date of publication of application: **29.07.2009**
(21) Application number: 08001230.5
(22) Date of filing: 23.01.2008
(51) Int. Cl.: G06F 21/24, G06F 21/00

(54) **Method for electronically signing electronic documents and method for verifying an electronic signature**

(71) Applicant: SIEMENS AKTIENGESELLSCHAFT, 80333 München (DE)
(72) Inventor: Haider, Sultan, 91052 Erlangen (DE); Heidenreich Georg, Dr., 91056 Erlangen (DE)

(57) **Abstract**

A medical professional registers himself with the trust centre (TC) or trusted registry (TR) acting on behalf of and/or operated by the mobile communication service provider. According to an embodiment of the present invention, the trust centre (TC) or trusted registry (TR) generates a pair of keys ("private key, public key") and associates the private key with the mobile-phone identity (IMEI, SIM-chip-number or phone number) in a secret table stored at the TC or TR. The TC or TR also associates the public key with the medical author's name (plus office address) as an entry into a directory.

## Description

The invention proposed aims to support easy signature by authors, e.g. medical professionals, who want to authenticate authorship of or validate electronic documents and for verification of such signatures by readers who want to validate content of such electronic documents.

In a classical "offline" scenario according to the prior art based on conventional paper, authors ink-sign documents after validating them. Such documents may then be stored locally or sent to parties trusting that signature. Trust of ink-signatures decreases in a larger community, because some ink-signature typically is not well-known in a large community. Currently, according to another prior art, secure "smartcards" with keys and algorithms on-card are being designed to allow for electronically signing documents on the client-side. Specialized trusted hardware at the client side is needed to maintain end-to-end-security in the smart-card scenario.

The present invention aims at an improvement of this situation. This is achieved by a method according to one of the independent claims. Advantageous further improvements of this invention are subjects of dependent claims.

According to the present invention, established means of communication (e.g. mobile phones) used for secure communication replace dedicated client -side IT-systems for the authentication of validated documents. It is assumed that e.g. a medical professional - acting as an author of medical documents - operates a mobile phone which is serviced by some mobile phone service provider, such that the medical professional is a registered client of the mobile phone service provider. Instead of mobile phones, similar mobile communication devices can be used by our scheme. A standardized resource locator, i.e. e.g. a storage address or a so called "uniform resource locator" (URL), used e.g. in the http-protocol, may be used to identify and locate a document.

In cases where these electronic documents are stored decentrally, a preferred embodiment of the invention suggests to store document references and signatures together in a central registry.

The proposed invention suggests to use a communication device - preferably a mobile communication device - for signing electronic documents and makes use of the trust that is already established between the corresponding communication service provider and the e.g. medical authors being clients of such a provider.

According to a preferred embodiment of the invention, a trusted central or centralized registry is used to verify the signatures instead of the reader, who is just given a "confirm/deny" information on his verification requests.

In the following, the invention is described in more detail by help of some figures and preferred embodiments.

Figure 1 shows in a schematic manner a process of selecting and / or signing a document according to a preferred embodiment of the invention.

Figure 2 shows in a schematic manner a process of verifying a signature according to a preferred embodiment of the invention.

Figure 3 shows in a schematic manner a process of generating table entries with signature keys according to a preferred embodiment of the invention.

Figure 4 shows in a schematic manner a registration and key generating process according to an alternative embodiment of the invention.

Figure 5 shows in a schematic manner a process of uploading a document to a document storage according to a preferred embodiment of the invention.

Figure 6 shows in a schematic manner a process of viewing an unvalidated document according to a preferred embodiment of the invention.

Figure 7 shows in a schematic manner a process of key generation and local key storage on a client's device according to an alternative embodiment of the invention.

Figure 8 shows in a schematic manner a process of signing a centrally stored document according to a preferred embodiment of the invention.

Figure 9 shows in a schematic manner a process of signing with a private key stored on a client's device according to an alternative embodiment of the invention.

Figure 10 shows in a schematic manner a process of verifying a signature according to a preferred embodiment of the invention.

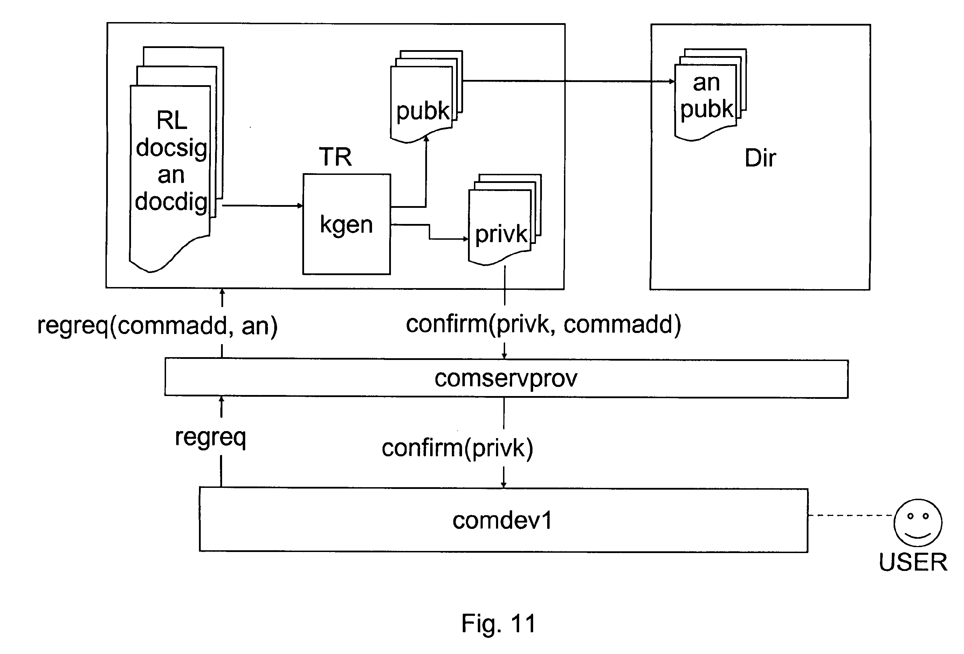

Figure 11 shows in a schematic manner a process of generating signature keys according to a preferred embodiment of the invention.

Figure 12 shows in a schematic manner a process of registering and signing in a single procedure according to a preferred embodiment of the invention.

Figure 13 shows in a schematic manner a process of verifying a document at a trusted registry according to a preferred embodiment of the invention.

Figure 14 shows in a schematic manner a process of obtaining a verification for a given document info by a client according to a preferred embodiment of the invention.

The present invention preferably uses established encryption schemes, either symmetric or asymmetric. A typical scenario could be like this:
A medical professional registers himself with the trust center (TC) or trusted registry (TR) acting on behalf of and/or operated by the mobile communication service provider. According to an embodiment of the present invention, the trust center (TC) or trusted registry (TR) generates a pair of keys ("private key, public key") and associates the private key with the mobile-phone identity (IMEI, SIM-chip-number or phone number) in a secret table stored at the TC or TR. The TC or TR also associates the public key with the medical author's name (plus office address) as an entry into a directory.

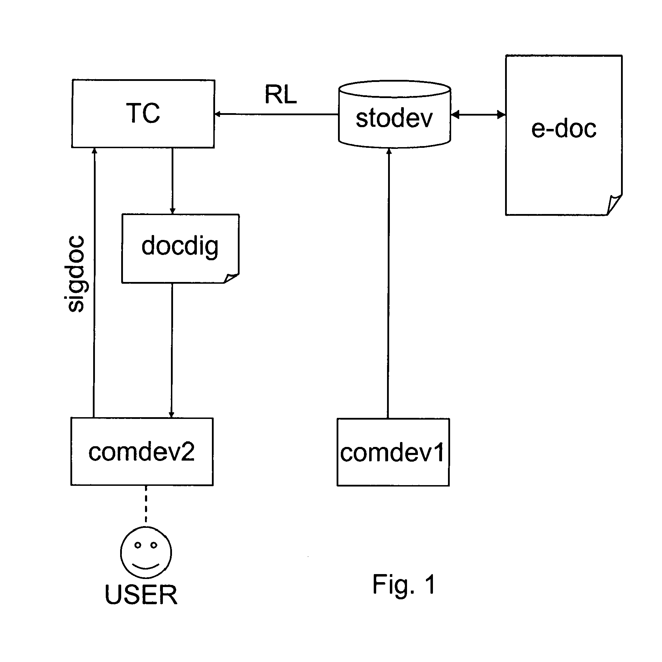

As shown in figure 1, a document (e-doc), which may have been selected e.g. by the user of a communication device comdev1, can be signed by the user (USER) of a communication device comdev2, by transmitting a signature (sigdoc) to a trust center (TC), the signature being an encrypted digest (docdig) of this document (e-doc). The digest has been sent to the communication device (comdev2) by the trust center (TC) after the resource locator (RL) of the document has been transferred from the storage device (stodev) to the trust center (TC). The resource locator may e.g. be a so called Uniform Resource Locator (URL) known in the internet (http), but may also be some other kind of unique identifier of the document. The document (e-doc) may be stored on a storage device (stodev), which can be part of the trust center (TC) or can also be a remote storage device, accessible through a (e.g. computer) network, e.g. like the internet.

According to one preferred embodiment of the present invention, the invention may be implemented in a method for electronically signing electronic documents comprising the following steps:
A) a first communication device (comdev1) is used to
   A1) select an existing document (e-doc) to be signed, the document being stored on a storage device (stodev) or to
   A2) upload a document (e-doc) to be signed to a storage device (stodev) and to
   A3) submit or cause the storage device or a processor unit associated with that storage device to submit a resource locator (RL) uniquely identifying this document (e-doc) to a trust center (TC), where the user (USER) of a second communication device (comdev2) is registered;
B) this second communication device (comdev2) - which may be identical to the first communication device (comdev1) - is then used to
   B1) authenticate the user (USER) as authorized to electronically sign at least some electronic documents and to
   B2) cause the trust center (TC) to sign the selected or uploaded document with the electronic signature of this user;
C) a signature (sigdoc) of this document (e-doc) is then created by the trust center (TC) by help of a key associated with this user;
D) by the trust center, the signature (sigdoc) is then associated with the document (e-doc) to be signed as the user's signature of this document.

According to another preferred embodiment of the present invention, the invention may be implemented in a method for electronically signing electronic documents comprising the following steps:
A) a first communication device (comdev1) is used to
   A1) select an existing document (e-doc) to be signed, the document being stored on a storage device (stodev) or to
   A2) upload a document (e-doc) to be signed to a storage device (stodev) and to
   A3) submit or cause the storage device or a processor unit associated with that storage device to submit a resource locator (RL) uniquely identifying this document (e-doc) to a trust center (TC), where the user (USER) of a second communication device (comdev2) is registered;
B) this second communication device (comdev2) - which may be identical to the first communication device (comdev1) - is then used to
   B1) authenticate the user (USER) as authorized to electronically sign at least some electronic documents and to
   B2) cause the trust center (TC) to create a digest (docdig) of the document (e-doc) to be signed and to
   B3) send the generated digest to the second communication device (comdev2);
C) a signature (sigdoc) of this digest (docdig) is then created by the second communication device (comdev2) by help of a key associated with this user, stored locally on this second communication device (comdev2);
D) the signature (sigdoc) is then sent back to the trust center (TC) and there associated with the document (e-doc) to be signed as the user's signature of this document.

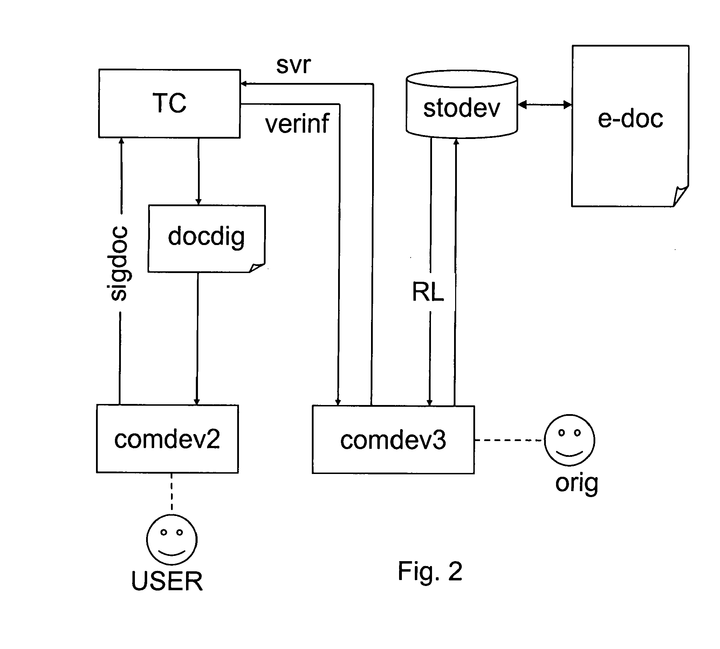

As shown in figure 2, verifying an electronic signature associated with a document (e-doc) stored on a storage device (stodev) may be done according to an embodiment of the present invention by a method comprising the following steps:
A) a third communication device (comdev3) - which may be identical to the first communication device (comdev1) and/or the second communication device (comdev2) - is used to
   A1) select an existing document (e-doc), the signature of which is to be verified, and to
   A2) submit a signature verification request command (svrc) to a trust center (TC) where the owner of the signature to be verified is registered;
B) the signature is then decrypted by the trust center and
C) information (verinf) is submitted to the originator (orig) of the request (svrc) allowing the originator to verify the signature.

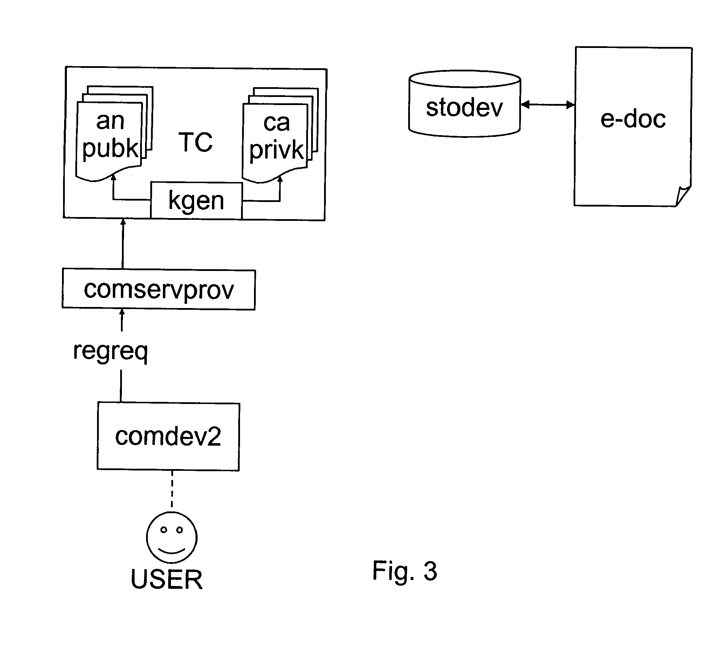

The process of generating table entries with signature keys is shown in figures 3 and / or 11. According to a preferred embodiment of the present invention, the user (USER) of a communication device (comdev2) submits a registration request (regreq) to his communication service provider (comservprov), who forwards this request - after including the author name (an) and the communication address (ca) - to the trust center (TC). In the trust center (TC), a public key (pubk) and a private key (privk) are generated by a key generation process (kgen), and the private key is associated with the communication address (ca), whereas the public key is associated with the author name (an). This can be stored on a directory (Dir).

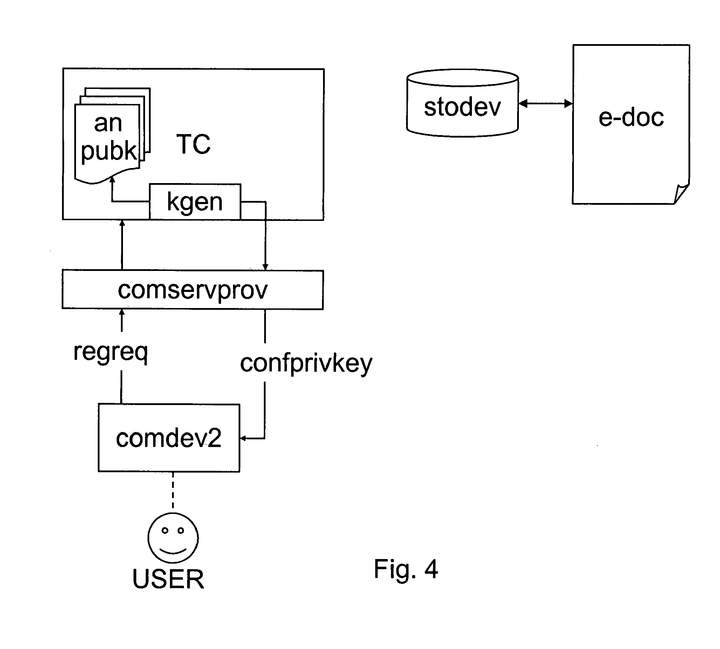

According to an alternative embodiment of the present invention the author's mobile phone is used to hold his private key: Instead of managing a secret table with private keys, the TC or TR might as well send back the generated private key to the mobile communication device of the medical author. In that case, the security requirements for the TC or TR are lowered and the list of "Keys and Authors" may be a public directory. This embodiment is illustrated in figure 4. After key generation, the private key (privk) is submitted from the trust center (TC) via the communication service provider (comservprov) to the communication device (comdev2) of the registered user (USER).

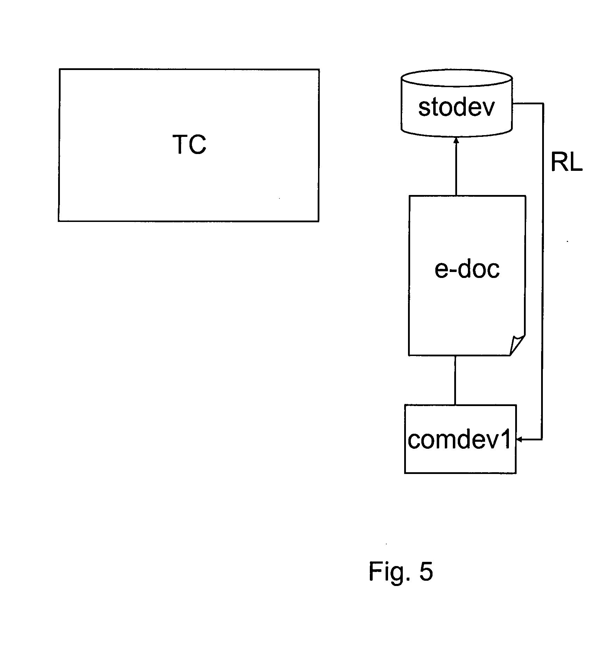

At another (e.g. later) instance in time, the registered (e.g. medical) author may want to upload a document to the storage location accessible to other (not necessarily registered) readers. For this purpose, as shown in figure 5, any IT-device connected to the storage Server may be used - including the author's mobile communication device, but also including devices (comdev1) automatically (or on behalf of a non-medical Person like assistants, nurses, patients or their related persons) uploading diagnostic or monitoring data without prior validation through medical staff. After the document (e-doc) has been uploaded to the storage device (stodev), a resource locator (RL), e.g. the so called URL or another suitable unique identifier will be submitted to the communication device (comdev1), so that the document may be identified at a later time.

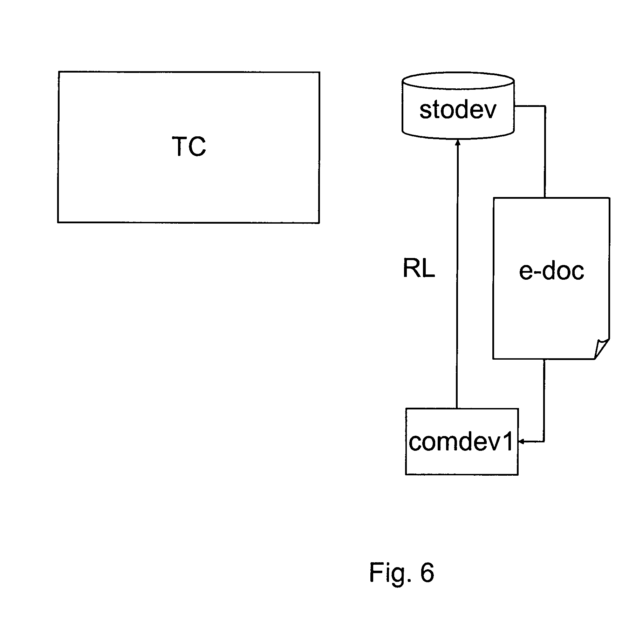

At any later instance in time, the medical author may want to view the uploaded document and eventually validate the content. This situation is illustrated in figure 6. To this end, he submits the resource locator (RL) to the storage device (stodev) and receives the associated document (e-doc) in return. In the case of automatic (or other unvalidated) upload, this viewing also serves the purpose of obtaining the storage address, e.g. the URL, for identifying and locating the document to be validated and signed.

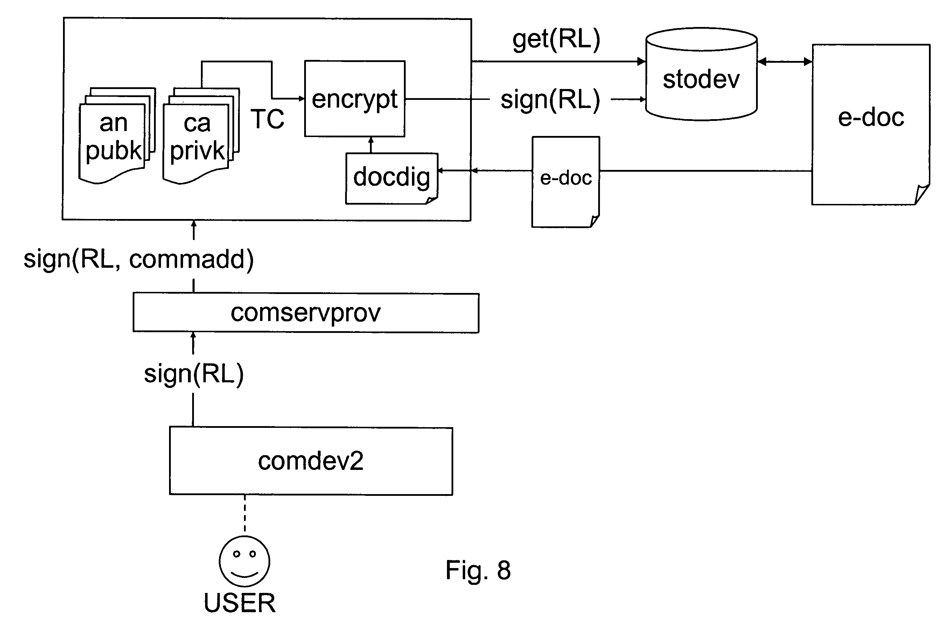

At any later instance in time, the registered medical author may want to authenticate authorship / reviewership of some centrally or decentrally stored document which he validated. He therefore - according to a preferred embodiment of the present invention - sends the document (i.e. uses e.g. a URL to instruct the central storage to send the document on his behalf) to the trust center (TC). There a digest - a number specifically depending on the content of the document - is generated and encrypted using the private key of the medical professional and - in encrypted form - sent back to the central storage where it will be attached to the document as a signature (together with specifications of the trust center (TC) and the algorithms used). This situation is illustrated in figure 8.

At any (possibly) later instance in time, the registered medical author may want to "sign a document", i.e. state his authorship / reviewership of some identified / located document which he validated and therefore sends the document' RL (i.e. a URL) to the trusted registry (TR), which loads that document and creates a digest - a number specifically depending on the content of the document - and asks the client's mobile device to encrypt that digest using the private key of the medical professional and registers a new record (consisting of the URL, the encrypted digest as well as the plaintext (i.e. unencrypted) digest plus possibly some useful search attributes) to be inserted into the registry's reference list.

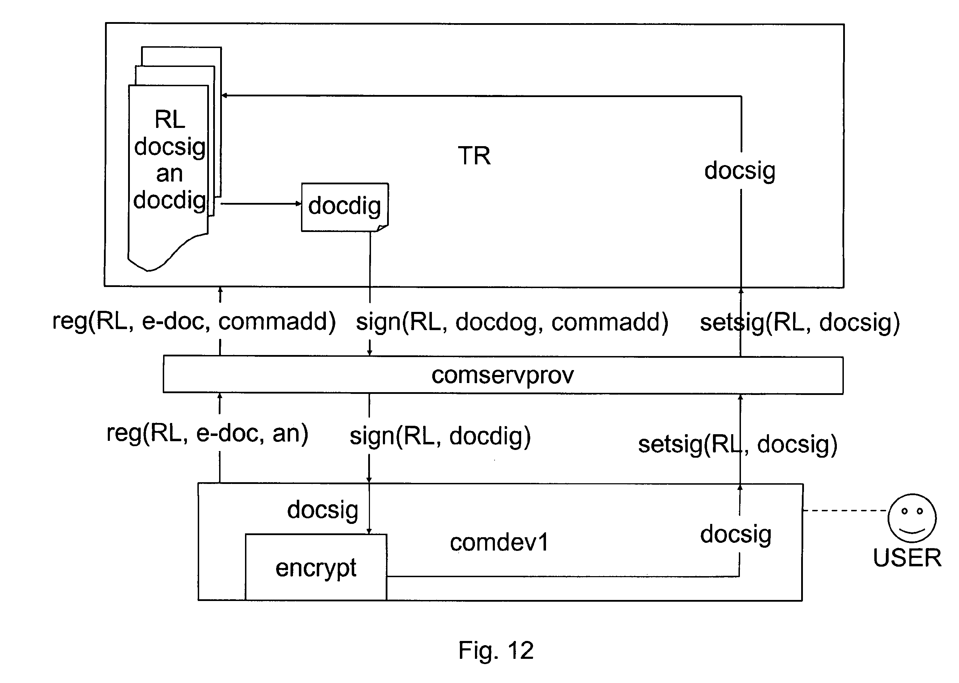

Registered (medical) authors may (figure 12) perform these sequences of steps as a single command using their mobile communication device, which provides the author's identity against the TR or TC and answers encryption requests.

Therefore there are at least two alternative implementations of the present invention, one using the author's mobile phone to hold his private key. In this case, instead of encrypting the digest using the author's private keys, the TC or TR will send the generated digest to the mobile communication device of the medical author, which then responds with the encrypted form of the digest using the private key stored locally on the mobile communication device.

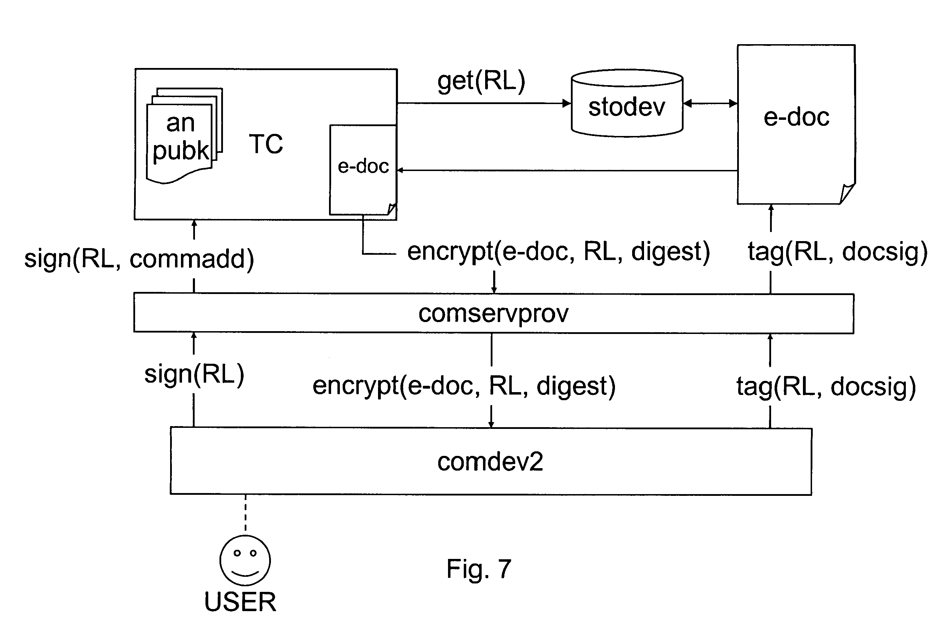

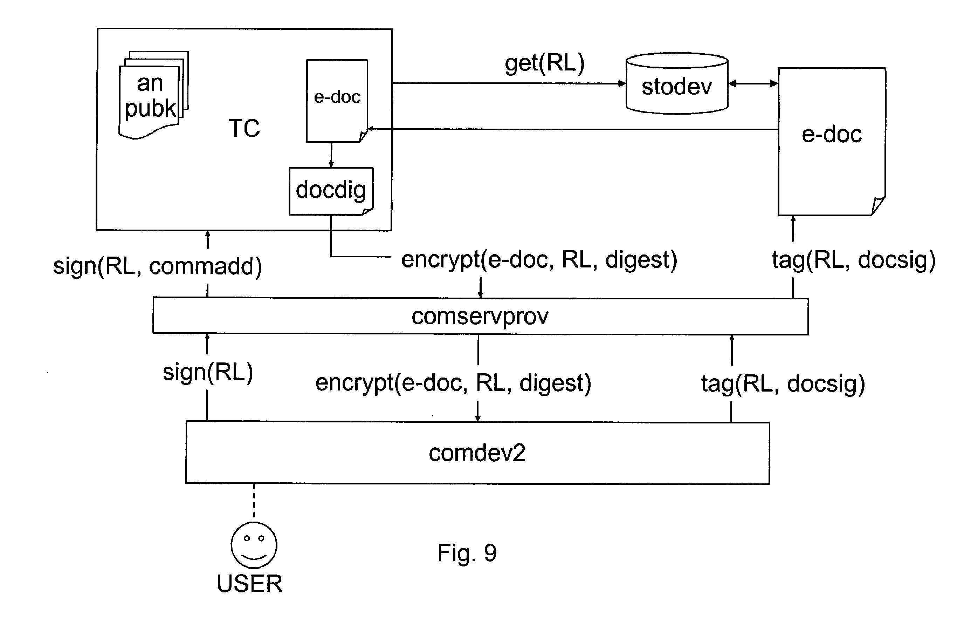

According to another alternative implementation, even the digest creation algorithm may be operated on the mobile device, e.g. in cases where the document is available locally (at the medical author's site) and its whole signature is generated (by creating a digest and encrypting that digest) by the mobile device, which then sends the signed document together with its URL (or another suitable identifier/locator or address) to the (e.g.) central storage. This situation is illustrated in figures 7 and 9. The registered user (USER) uses his communication device (comdev2) to cause the trust center (TC) to get the document (e-doc) to be signed. To this end, he submits a request (sign(RL)) designating the identity (RL) of the document (e-doc) to the trust center (TC) via his communication provider (comservprov), who ads the communication address (commadd) to the request (sign(RL, commadd)). The trust center (TC) gets (get(RL)) the document (e-doc) corresponding to the resource locator (RL) from the storage device (stodev), creates a digest, and submits (encrypt(e-doc, RL, digest) the digest to the communication device (comdev2). There the digest is encrypted with the private key, whereby a signature (docsig) is created, which is then submitted as a tag (tag(RL, docsig)) to the storage device (stodev), where it is associated to the document (e-doc).

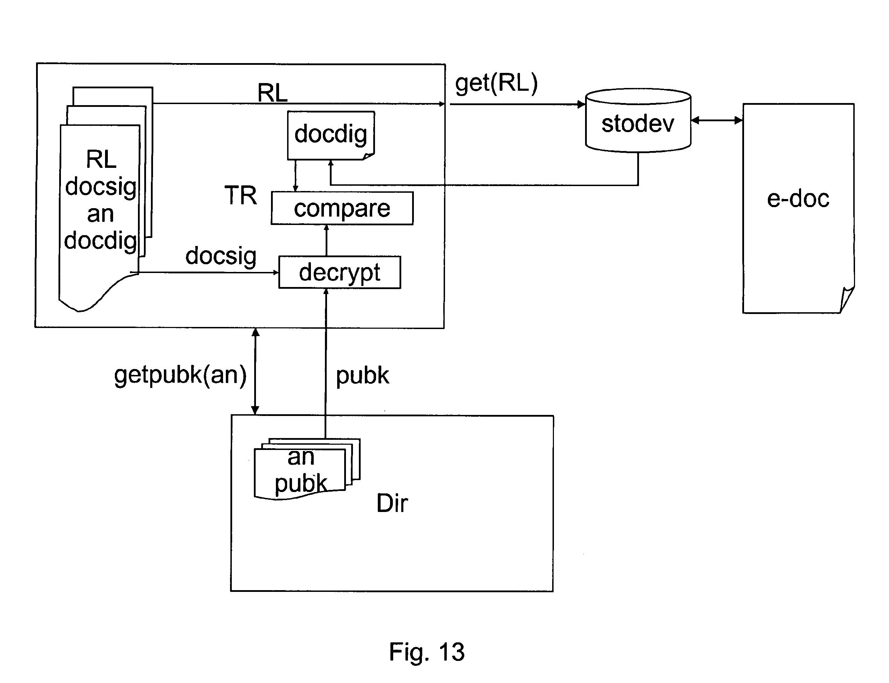

At any later instance of time and at the discretion of the trusted registry (TR), the records in the registry may be used to verify the signature against the document storage, in order to exclude a compromised communication link or a compromised decentralized storage. For that purpose, as e.g. shown in figure 13, the document is obtained from the storage and a new digest is generated and compared against the decrypted signature, unsigning the public key obtained from the (trusted) directory if they do not match, the entry will be deleted or marked a questionable.

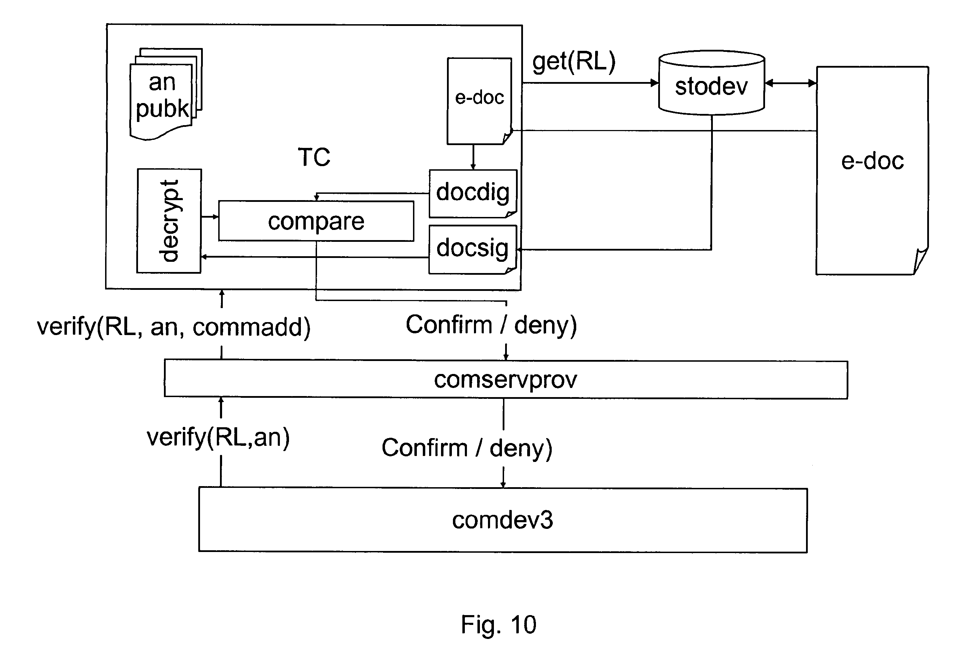

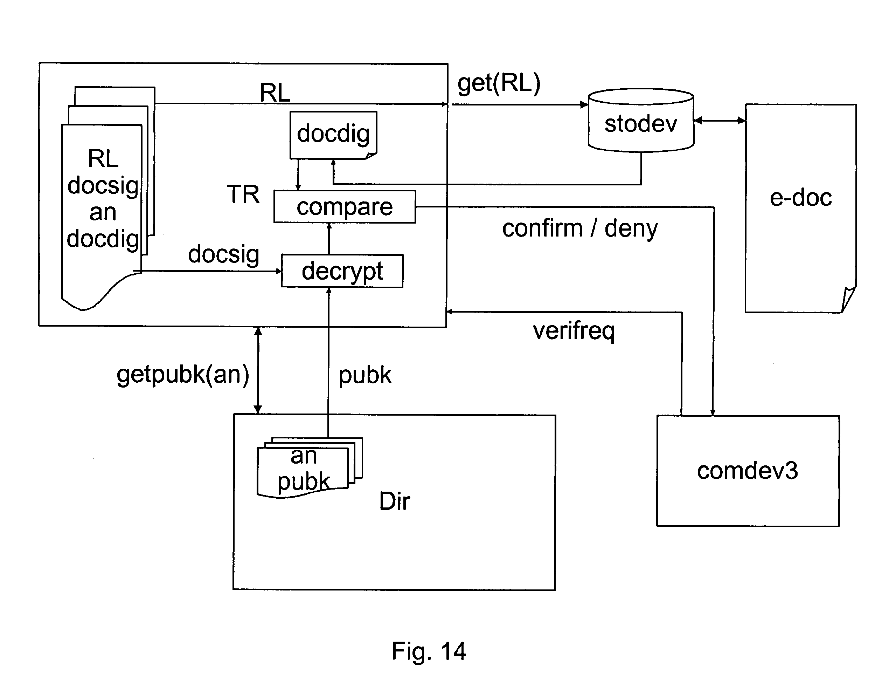

At any later instance in time, some reader may want to verify authorship / reviewership of the specified, named author /reviewer of some registered or centrally stored document and therefore
- sends the documents resource locator (e.g. the URL) to the trusted registry (TR) or
- sends the document (i.e. uses the URL to instruct the central storage to send the document on his behalf) to the trust centre,
   where a digest - specifically depending on the content of the document - is generated and compared to the
- the digest (i.e. the plain text form of the signature) also attached to the document referenced by the registry
   or
- the decrypted form of the signature (using the public key of the specified medical author for decryption) attached to the document returned by the central storage. This situation is shown in figures 10 or 14.

The TC or TR will report (confirm/deny), whether the signature is valid, which is true if and only if the decrypted (decrypt) signature (docsig) matches the digest (docdig). Any reader may perform this sequence of steps as a single command on any identified / located document with such a signature.

According to another embodiment of the invention, there is an alternative using symmetric keys: Since the TC never releases the public keys of registered medical authors, they may as well be identical to the private key used for encryption. Thus, symmetric encryption - with the same key used for encrypting and decrypting - may be used as well in this scheme. The only difference to the trust center (described above) will be, that a single key is generated and inserted into the only table of keys in the TC. Both generation and verification of the signature is done within the TC and with the same key. The "symmetric" scheme does, however, exclude the "private key on mobile device" variant, because the trust center has anyway the highest security requirements in this case. Brute force attacks against the keys have, however, to be avoided using dedicated measures in the TC, since attacking the "decryption key" in this scheme harms the "encryption key" at the same time.

Some embodiments of this invention are especially suitable for cases, in which the data stored (e.g. in some decentralized storage) or the data uploaded, i.e. the document, is not authored by the one who signs it, but is authored by some third party (e.g. assistant, nurse, patient, other person) or by some automatic sender that stores or uploads unvalidated ("raw") data. In some of these cases, the invention proposes that the (medical) "authorizer" just validates the content of the data by looking at it as it is already stored on the (central or decentralized) storage server and then signs it using the methods proposed above.

This invention also covers the case, where - instead of mobile phones - other IT-devices with sender / receiver-functionality are used by the (medical) author or signer, provided these devices have a unique communication identity (such as IP internet address, SIM chip number, telephone ENUM or, IME1 or similar address) and provided this communication identity is linked to a registered entity (as owner or User: "medical author").

It can be easily inferred from the above disclosure of the present invention, that important advantages of the present invention or at least some respective embodiments of this invention are as follows:
- a medical professional's identity is provided without extra hardware (cell phone / SIM access provider);
- only few assumptions are necessary about client's information technology equipment;
- simple and existing software can be used to implement the invention, hardware and protocols are combined to support e-signature;
- higher availability may be achieved when compared to complex telematics IT-systems and health cards;
- storage Server(s) may be separated from signature generation / verification;
- content source(s) may be separated from the communication service provider;
- content source(s) may be separated from signature generation / verification;
- a central registry may be used for managing decentralized storage of documents;
- only secure places for the generation of a digest are needed;
- each private key may be restricted to be always kept with the (medical) client;
- the technical signature-to-documents verification will be separated from the reader's signature request.

## Claims

1. Method for electronically signing electronic documents comprising the following steps:
A) a first communication device (comdev1) is used to
A1) select an existing document (e-doc) to be signed, the document being stored on a storage device (stodev) or to
A2) upload a document (e-doc) to be signed to a storage device (stodev) and to
A3) submit or cause the storage device or a processor unit associated with that storage device to submit a resource locator (RL) uniquely identifying this document (e-doc) to a trust center (TC), where the user (USER) of a second communication device (comdev2) is registered;
B) this second communication device (comdev2) - which may be identical to the first communication device (comdev1) - is then used to
B1) authenticate the user (USER) as authorized to electronically sign at least some electronic documents and to
B2) cause the trust center (TC) to create a digest (docdig) of the document (e-doc) to be signed and to
B3) send the generated digest to the second communication device (comdev2);
C) a signature (sigdoc) of this digest (docdig) is then created by the second communication device (comdev2) by help of a key associated with this user, stored locally on this second communication device (comdev2);
D) the signature (sigdoc) is then sent back to the trust center (TC) and there associated with the document (e-doc) to be signed as the user's signature of this document.

2. Method according to claim 1, where the key is or has been generated by the trust center (TC).

3. Method according to one of the preceding claims, where the key is a private key of an asymmetric crypto system comprising pairs of public and private keys.

4. Method according to one of the preceding claims, where the second communication device (comdev2) is capable of communicating with the trust center according to an authentication protocol, whereby the authentication of this second communication device (comdev2) and its registered user is checked.

5. Method according to one of the preceding claims, where the second communication device (comdev2) is a cellular mobile phone equipped with software supporting the method.

6. Method for verifying an electronic signature associated with a document (e-doc) stored on a storage device (stodev) comprising the following steps:
A) a third communication device (comdev3) - which may be identical to the first communication device (comdev1) and/or the second communication device (comdev2) - is used to
A1) select an existing document (e-doc), the signature of which is to be verified, and to
A2) submit a signature verification request command (svrc) to a trust center (TC) where the owner of the signature to be verified is registered;
B) the signature is then decrypted by the trust center and
C) information (verinf) is submitted to the originator (orig) of the request (svrc) allowing the originator to verify the signature.

7. Method according to claim 6, where
A) a signature verification request command (svrc) is submitted to the trust center (TC) together with a resource locator (RL) uniquely identifying this document (e-doc) and where
B) the trust center then locates the document and its associated signature to
C) decrypt this signature.

8. Method according to claim 6, where
A) a signature verification request command (svrc) is submitted to the trust center (TC) together with a signature (sigdoc) to be verified and where
B) the signature (sigdoc) is then decrypted by the trust center (TC).

9. Method according to one of the claims 6 to 8, where the information submitted to the originator is the decrypted signature.

10. Method according to claim 9, where the decrypted signature is a digest of the selected document (e-doc), which can be compared by the originator of the request with a digest stored together with the document (e-doc).

11. Method according to one of claims 6 - 10, where a digest is created by the trust center (TC) upon request of the originator and then submitted to the originator.
